# EUROPEAN PATENT APPLICATION

(11) **EP 3 051 402 A1**
(43) Date of publication of application: **03.08.2016**
(21) Application number: 14848728.3
(22) Date of filing: 24.06.2014
(51) Int. Cl.: G06F 3/0481

(54) **FILE DISPLAY METHOD AND DEVICE**

(30) Priority: 27.09.2013 CN 201310452495
(71) Applicant: ZTE Corporation, Shenzhen, Guangdong 518057 (CN)
(72) Inventor: GONG, Le, Shenzhen Guangdong 518057 (CN); ZHOU, Zhong, Shenzhen Guangdong 518057 (CN); HUANG, Ling, Shenzhen Guangdong 518057 (CN); LUO, Chan, Shenzhen Guangdong 518057 (CN); WANG, Tingting, Shenzhen Guangdong 518057 (CN)
(74) Representative: Carangelo, Pierluigi
(86) International application number: PCT/CN2014/080652
(87) International publication number: WO 2015/043258

(57) **Abstract**

Disclosed are a method and device for file display. The method includes: receiving a trigger signal in a case where a first file is displayed on a terminal screen; and in response to the trigger signal, displaying a preset second file on the terminal screen. The problem of privacy protection when a terminal displays a file is solved, and the user experience of electronic reading products is improved.

## Description

### Technical Field

The present disclosure relates to the communication field, and in particular to a method and device for file display.

### Background

With the development of the mobile internet and mobile terminals, smart phones with a touch screen becomes widely available, and turns to an indispensable part of people's life as well as a necessary tool for people to pass time pockets. Along with the development of electronic telecommunication, the form of books also develops from the original single form of paper books to multiple forms such as e-books or mobile terminal reading.

Mobile phone reading also becomes a main way for people using mobile phones to pass time pockets in occasions such as before eating meals, after meetings, waiting in line and before sleeping. In these occasions, users are inevitable to contact more or less with surrounding friends. For privacy concern, when others come close, users would not like others to see what books they are reading, however, reading products provided based on the related art basically cannot satisfy such requirement of users.

There is no effective solution which aims at the problem of privacy protection when a terminal displays a file in the related art.

### Summary

The embodiments of the present disclosure provide a method and device for file display so as to at least solve the problem of privacy protection when a terminal displays a file.

According to one aspect of the embodiments of the present disclosure, a method for file display is provided, comprising: receiving a trigger signal in a case where a first file is displayed on a terminal screen; and in response to the trigger signal, displaying a preset second file on the terminal screen.

The terminal screen may be a touch screen, and the trigger signal may comprise a predetermined gesture received by the touch screen.

The predetermined gesture may comprise a gesture of touching the touch screen by three touch points at a same time.

The touch screen may be divided into one area or multiple different areas, wherein different signals detected in different areas may be used for different control of file display.

The trigger signal may be detected in a scope of a whole terminal screen or in a scope of one area of the terminal screen.

The first file and the second file may be e-books, after the preset second file is displayed on the terminal screen, the method may further comprise: receiving a backward signal; returning back to a bookshelf interface according to the backward signal, wherein a cover of the first file is displayed in a location of the first book in the bookshelf interface; and after receiving a tap on the cover of the first file from a user, displaying the first file on the terminal screen.

According to another aspect of embodiments of the present disclosure, a device for file display is provided, which comprises: a receiving component, configured to receive a trigger signal in a case where a first file is displayed on a terminal screen; and a display component, configured to, in response to the trigger signal, display a preset second file on the terminal screen.

The device for file display may further comprise: the terminal screen is a touch screen, and the trigger signal comprises a predetermined gesture received by the touch screen.

The predetermined gesture may comprise a gesture of touching the touch screen by three touch points at a same time.

The touch screen may be divided into one area or multiple different areas, wherein different signals detected in different areas may be used for different control of file display.

The receiving component may be configured to detect the trigger signal in a scope of a whole terminal screen or in a scope of one area of the terminal screen.

The first file and the second file may be e-books, and after the preset second file is displayed on the terminal screen, the receiving component may be further configured to: receive a backward signal; and return back to a bookshelf interface according to the backward signal, wherein a cover of the first file is displayed in a position of the first book in the bookshelf interface; the display component may be further configured to, after receiving a tap on the cover of the first file from a user, display the first file on the terminal screen.

According to the embodiments of the present disclosure, a trigger signal is received in a case where a first file is displayed on a terminal screen; and in response to the trigger signal, a preset second file is displayed on the terminal screen. The problem of privacy protection when a terminal displays a file is solved, and the user experience of electronic reading products is improved.

### Brief Description of the Accompanying Drawings

The accompanying drawings constituting a part of the application are included to provide further understanding of the present application. The schematic embodiments and description thereof the present application are intended to explain the present application, and do not constitute improper restriction to the present disclosure. In the accompany drawings:
Fig. 1 is a flow chart of a method for file display according to an embodiment of the present disclosure;
Fig. 2 is a structure diagram of a device for file display according to an embodiment of the present disclosure;
Fig. 3 is the first flow chart of protecting reading privacy of users according to an example embodiment of the present disclosure;
Fig. 4 is the second flow chart of protecting the reading privacy of users according to an example embodiment of the present disclosure;
Fig. 5 is the third flow chart of protecting the reading privacy of users according to an example embodiment of the present disclosure;

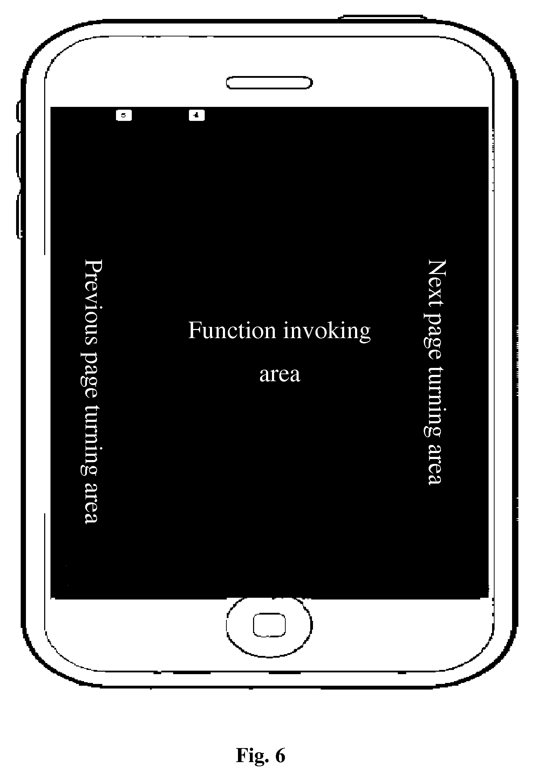

Fig. 6 is a schematic diagram of functional partition of interactive operation according to an example embodiment of the present disclosure;
Fig. 7 is a schematic diagram of an effective operational area of an interactive action of three-finger tap according to an example embodiment of the present disclosure;
Fig. 8 is a schematic diagram of a normal state of a reading page of a reading interface according to an example embodiment of the present disclosure;
Fig. 9 is a schematic diagram of the reading page interface according to an example embodiment of the present disclosure;
Fig. 10 is a schematic diagram of an invoked preset privacy protection interface according to an example embodiment of the present disclosure;
Fig. 11 is a schematic diagram of an activated state of a toolbar of the preset privacy protection interface according to an example embodiment of the present disclosure;
Fig. 12 is a schematic diagram of a bookshelf page of a reading software according to an example embodiment of the present disclosure;

### Detailed Description of the Embodiments

It should be noted that the embodiments of the present disclosure and the features in the embodiments can be arbitrarily combined with each other if there is no conflict.

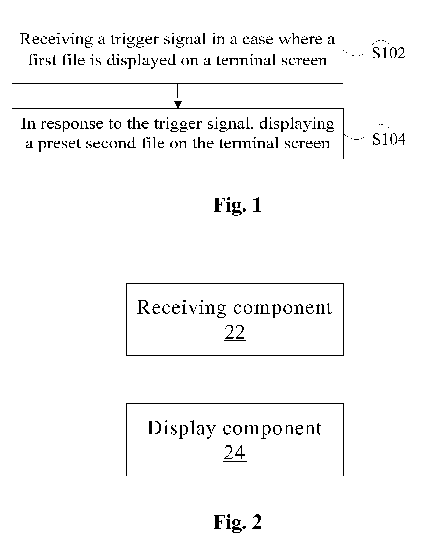

The present embodiment of the present disclosure provides a method for file display. Fig. 1 is a flow chart of a method for file display according to the embodiment of the present disclosure, as shown in Fig. 1, the method comprises steps as follows:
Step S102, receiving a trigger signal in a case where a first file is displayed on a terminal screen;
Step S104, in response to the trigger signal, displaying a preset second file on the terminal screen.

Through the aforementioned steps, a trigger signal is received in a case where a first file is displayed on a terminal screen; and a preset second file is displayed on the terminal screen in response to the trigger signal. The problem of privacy protection when a terminal displays a file is solved through the aforementioned steps, and the user experience of electronic reading products is improved.

In the present embodiment, the trigger signal may be a button signal or a sensor signal and the like. Alternatively, in a case that the terminal screen is a touch screen, the trigger signal may be a predetermined gesture received by the touch screen. The predetermined gesture may be multi-point swipe or multi-point touch. These predetermined gestures are used for, when the user is quickly sending the trigger signal, enabling the terminal to receive the trigger signal and quickly switch from a display interface of the first file to a preset interface of the second file. In the example embodiment, in a case that the terminal screen is a touch screen, the trigger signal may comprise a predetermined gesture received by the touch screen and the predetermined gesture may comprise a gesture of touching the touch screen by three touch points at the same time.

In an example embodiment, in a case that the terminal screen is a touch screen, the touch screen may be divided into one area or multiple different areas, wherein different signals detected in different areas may be used for different control of file display. The user may touch different areas of the screen to represent different operation instructions. For example, the touch in the middle area represents invoking a toolbar; the touch in the left or right area represents turning to a previous page or a next page of an electronic reading file. In an example embodiment, the terminal may be configured to detect the trigger signal in a scope of a whole terminal screen or in a scope of one area of the terminal screen and to respond with operations corresponding to the trigger signal. For example, since a function of this mobile phone reading software is mainly used to protect privacy when others come close, there may be various emergency circumstances. In order to meet the need, requirement of precise tap for a user needs to be comparatively low. Therefore, the effective area that can be taped may be comparatively large, when the function is triggered, the interface should give corresponding feedback immediately. By using this way, the accuracy of the users' touch can be improved and the misoperation is effectively prevented.

In the present embodiment, preferably, in the reading page of the reading software, operation areas for different demands are provided for different interactive gestures. The regular functional areas of reading pages are that the middle area may invoke the toolbar, and the left or right area may turn pages. On the basis of areas satisfying regular functions of reading pages, the whole interface may provide operational environment for the operation of three-finger tap. For example, in a reading page, the user provides the interactive gesture of three-finger operation, a timely feedback can be sent to the user through the interface. What's more, a setting of a system default reading book may be customized by the reading software, and a page that is being read may be customized too.

In the present embodiment, after the user activates the privacy protection operation of a file, the original file interface for which a privacy protection is desired by the user may not be returned back directly. There may be lots of circumstances after the user activates the privacy protection operation. For example, after the user exits the reading software and then reenters the reading software, a cover of the first file is displayed in a position of the first book in a bookshelf interface. In the situation that the user doesn't exist the reading software, the preset second file is displayed on the terminal screen and the user may invoke the main menu bar to conduct related reading operation on the second file. The pressing of a backward button may trigger to return back to a bookshelf page, though the first file may not be displayed directly, the cover of the first file is displayed in the position of the first book in the bookshelf interface. In a case that the user chooses the cover of the first file, the interface of the original first file is recovered, therefore, the privacy of the user is better protected and the operation steps for the user to recover the original privacy protection file is reduced, which enhance the experience of user interface operation.

In the present embodiment, a device for file display is provided. The device for file display is used to implement the abovementioned method. What is already described in the foregoing embodiment will not be described again. It should be noted that names of components of the following device don't constitute actual limitations for components. For example, a receiving component may be stated as "configured to receive a trigger signal in a case where a first file is displayed on a terminal screen". The following components may be implemented by a processor. As another example, the receiving component may be stated as "a processor, configured to receive a trigger signal in a case where a first file is displayed on a terminal screen" or "a processor, comprising a receiving component" and the like.

Fig. 2 is a structure diagram of a device for file display according to an embodiment of the present disclosure. As shown in Fig. 2, the device 20 comprises: a receiving component 22, a display component 24. The device is described in detail as follows.

The receiving component 22 is configured to receive a trigger signal in a case where a first file is displayed on a terminal screen; and

The display component 24 is configured to, in response to the trigger signal, display a preset second file on the terminal screen.

According to the foregoing components, the receiving component 22 is configured to receive a trigger signal in a case where a first file is displayed on a terminal screen; and the display component 24 is configured to, in response to the trigger signal, display a preset second file on the terminal screen. The problem of privacy protection when a terminal displays the file is solved, and the user experience of electronic reading products is improved.

In the present embodiment, preferably, the receiving component 22 may be configured to detect the trigger signal in a scope of a whole terminal screen or in a scope of one area of the terminal screen.

In the present embodiment, preferably, the first file and the second file may be e-books, and after the preset second file is displayed on the terminal screen, the receiving component 22 may be further configured to receive a backward signal and return back to a bookshelf interface according to the backward signal, wherein a cover of the first file is displayed in a position of the first book in the bookshelf interface. The display component 24 is further configured to, after receiving a tap on the cover of the first file from a user, display the first file on the terminal screen.

The present disclosure is described hereinafter in conjunction with the example embodiments of the present disclosure.

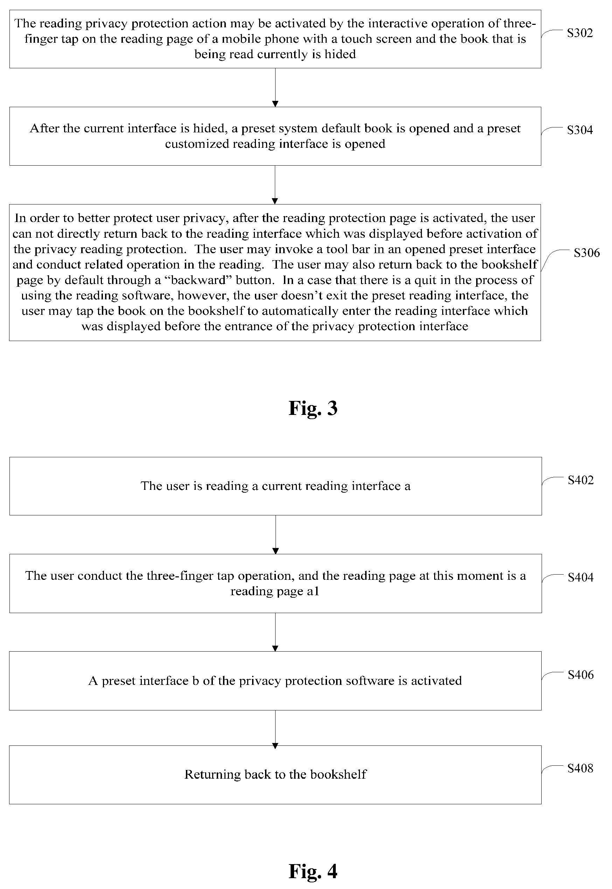

The example embodiment provides a method for protecting reading privacy of users. Fig. 3 is the first flow chart of protecting reading privacy of users according to an example embodiment of the present disclosure. As shown in Fig. 3, the method includes steps as follows.

Step S302, the reading privacy protection action may be activated by the interactive operation of three-finger tap on the reading page of a mobile phone with a touch screen and the book that is being read currently is hided;

Step S304, after the current interface is hided, a preset system default book is opened and a preset customized reading interface is opened.

Step S306, in order to better protect user privacy, after the reading protection page is activated, the user can not directly return back to the reading interface which was displayed before activation of the privacy reading protection. The user may invoke a tool bar in an opened preset interface and conduct related operation in the reading. The user may also return back to the bookshelf page by default through a "backward" button. In a case that there is a quit in the process of using the reading software, however, the user doesn't exit the preset reading interface, the user may tap the book on the bookshelf to automatically enter the reading interface which was displayed before the entrance of the privacy protection interface.

Fig. 4 is the second flow chart of protecting reading privacy of users according to an example embodiment of the present disclosure, as shown in Fig. 4, the method includes steps as follows.

Step S402, the user is reading a current reading interface a;

Step S404, the user conduct the three-finger tap operation, and the reading page at this moment is a reading page a1.

Step S406, a preset interface b of the privacy protection software is activated;

Step S408, returning back to the bookshelf.

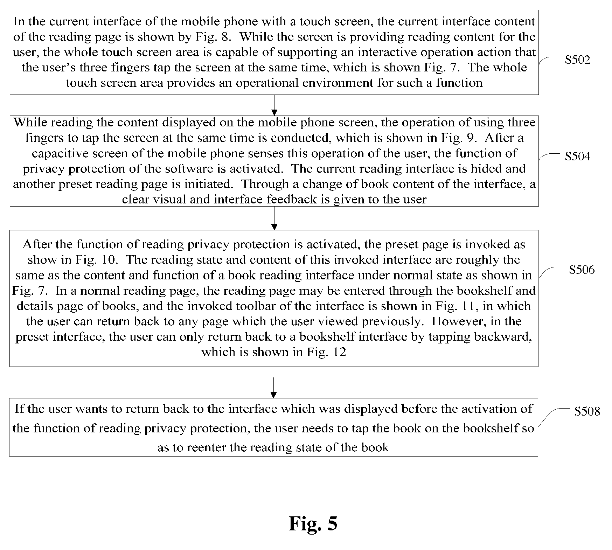

The privacy protection method provided by the example embodiment is a method which is based on a mobile phone touch screen interface of the reading software and can realize privacy protection through a new interactive form and interface feedback after the operation. Fig. 5 is the third flow chart of protecting reading privacy of users according to an example embodiment of the present disclosure, as shown in Fig. 5, the method includes steps as follows.

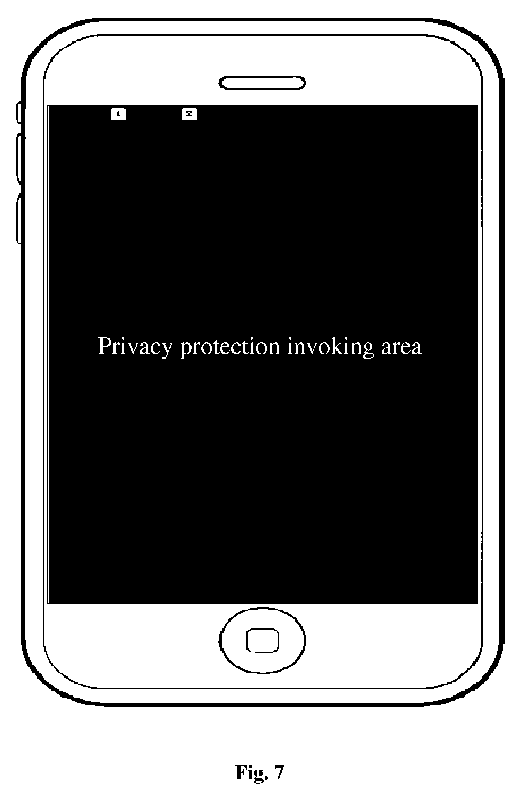

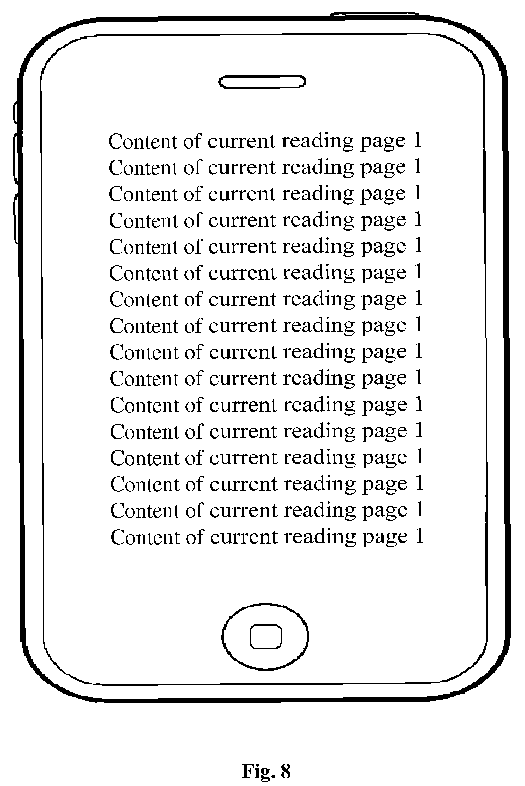

Step S502, in the current interface of the mobile phone with a touch screen, the current interface content of the reading page is shown by Fig. 8. While the screen is providing reading content for the user, the whole touch screen area is capable of supporting an interactive operation action that the user's three fingers tap the screen at the same time, which is shown Fig. 7. The whole touch screen area provides an operational environment for such a function.

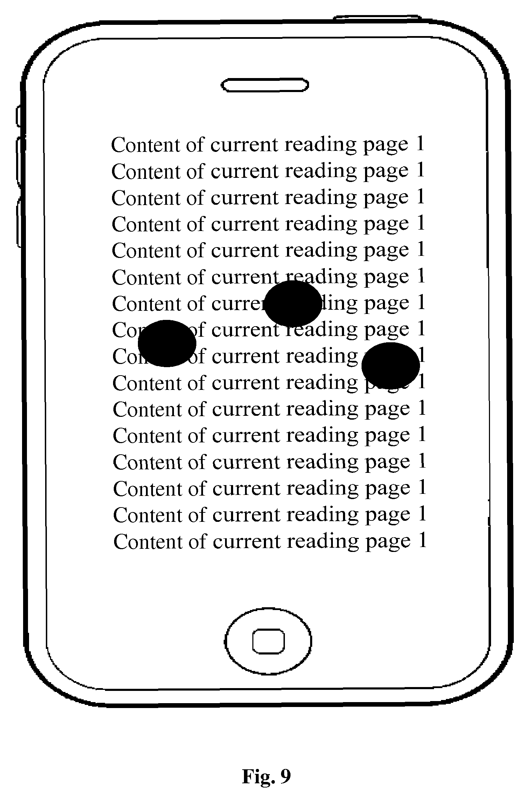

Step S504, while reading the content displayed on the mobile phone screen, the operation of using three fingers to tap the screen at the same time is conducted, which is shown in Fig. 9. After a capacitive screen of the mobile phone senses this operation of the user, the function of privacy protection of the software is activated. The current reading interface is hided and another preset reading page is initiated. Through a change of book content of the interface, a clear visual and interface feedback is given to the user.

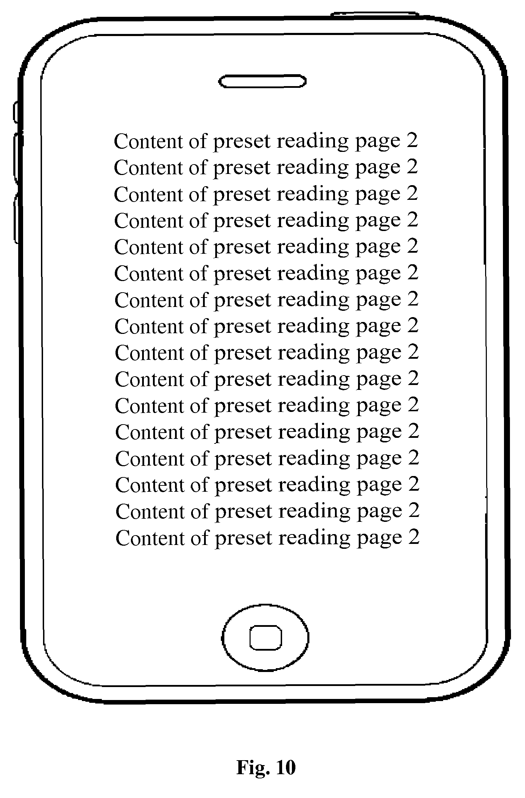

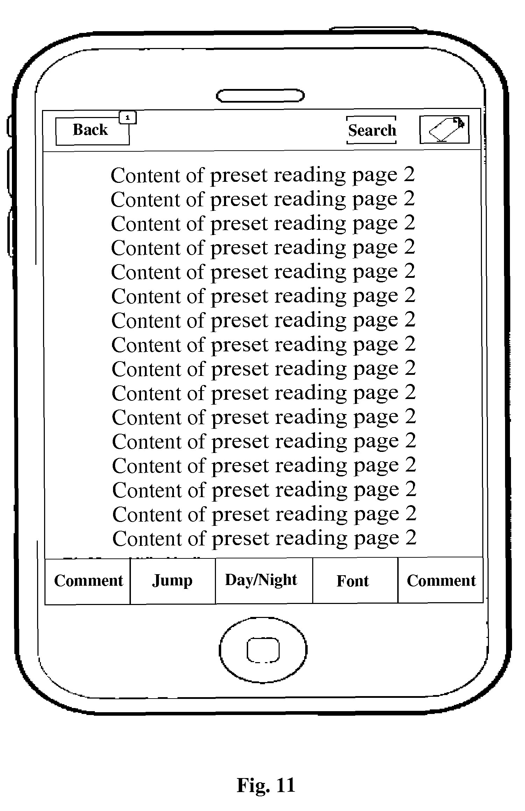

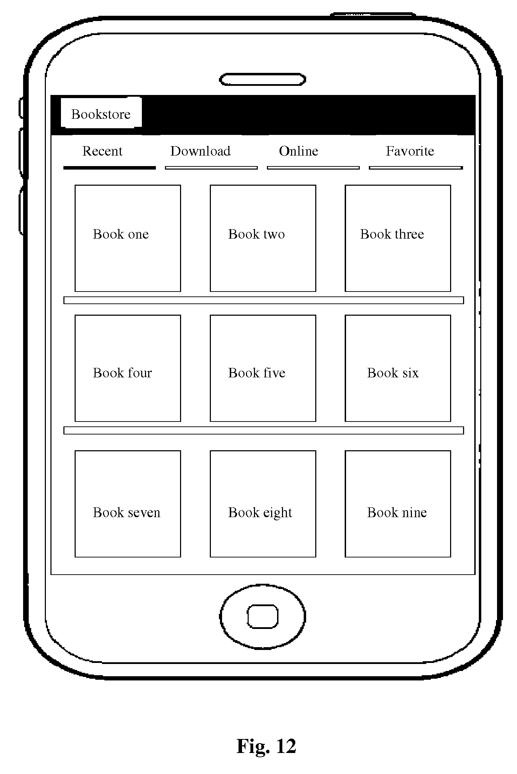

Step S506, after the function of reading privacy protection is activated, the preset page is invoked as show in Fig. 10. The reading state and content of this invoked interface are roughly the same as the content and function of a book reading interface under normal state as shown in Fig. 7. In a normal reading page, the reading page may be entered through the bookshelf and details page of books, and the invoked toolbar of the interface is shown in Fig. 11, in which the user can return back to any page which the user viewed previously. However, in the preset interface, the user can only return back to a bookshelf interface by tapping backward, which is shown in Fig. 12.

Step S508, if the user wants to return back to the interface which was displayed before the activation of the function of reading privacy protection, the user needs to tap the book on the bookshelf so as to reenter the reading state of the book.

The present example embodiment provides a method for protecting mobile phone reading privacy of users. By providing a new interactive form in the interface of mobile phone software, the users may use an operation gesture, e.g., a tap with three fingers at the same time, to hide current interface of the reading software, then activate and invoke a preset default interface of the system, which is displayed on the mobile phone screen through timely interface feedback. In this way, when the user is using the reading software and there are others coming close, the method can help the user to protect the reading privacy so as to avoid the awkward situation that others see what the user is reading. Therefore, the user's experience of reading products is enhanced. The interactive gesture provides users with a new function, enhances the user experience and respect the privacy psychology of users. In addition, in the invoked preset interface, the user can conduct related operations in the reading as well. The user can use backward button of the toolbar invoked from the reading interface to return to the bookshelf interface, rather than return to the previous reading page, thus, the user's privacy is better protected.

### Industrial Applicability

According to the embodiments of the present disclosure, a trigger signal is received in a case where a first file is displayed on a terminal screen; and a preset second file is displayed on the terminal screen in response to the trigger signal. The problem of privacy protection when a terminal displays a file is solved, and the user experience of electronic reading products is improved.

The foregoing are merely example embodiments of the present application and not to be intended to limit the present disclosure. For those skilled in the art, the present disclosure could have various modifications and variations. Any modifications, equivalent replacements and improvements, which fall within the essence of the present disclosure, shall be included in the protection scope defined by the appended claims of the present disclosure.

## Claims

1. A method for file display, comprising:
receiving a trigger signal in a case where a first file is displayed on a terminal screen; and
in response to the trigger signal, displaying a preset second file on the terminal screen.

2. The method as claimed in claim 1, wherein the terminal screen is a touch screen and the trigger signal comprises a predetermined gesture received by the touch screen.

3. The method as claimed in claim 2, wherein the predetermined gesture comprises a gesture of touching the touch screen by three touch points at a same time.

4. The method as claimed in claim 2, wherein the touch screen is divided into one area or multiple different areas, wherein different signals detected in different areas are used for different control of file display.

5. The method as claimed in claim 4, wherein the trigger signal is detected in a scope of a whole terminal screen or in a scope of one area of the terminal screen.

6. The method as claimed in any one of claim 1 to claim 5, wherein the first file and the second file are e-books, and after the preset second file is displayed on the terminal screen, the method further comprises:
receiving a backward signal;
returning back to a bookshelf interface according to the backward signal, wherein a cover of the first file is displayed in a location of the first book in the bookshelf interface; and
after receiving a tap on the cover of the first file from a user, displaying the first file on the terminal screen.

7. A device for file display, comprising:
a receiving component, configured to receive a trigger signal in a case where a first file is displayed on a terminal screen; and
a display component, configured to, in response to the trigger signal, display a preset second file on the terminal screen.

8. The device as claimed in claim 7, wherein the terminal screen is a touch screen, and the trigger signal comprises a predetermined gesture received by the touch screen.

9. The device as claimed in claim 8, wherein the predetermined gesture comprises a gesture of touching the touch screen by three touch points at a same time.

10. The device as claimed in claim 8, wherein the touch screen is divided into one area or multiple different areas, wherein different signals detected in different areas are used for different control of file display.

11. The device as claimed in claim 10, wherein the receiving component is configured to detect the trigger signal in a scope of a whole terminal screen or in a scope of one area of the terminal screen.

12. The device as claimed in any one of claim 7 to claim 11, wherein the first file and the second file are e-books, and after the preset second file is displayed on the terminal screen, the receiving component is further configured to receive a backward signal and return back to a bookshelf interface according to the backward signal, wherein a cover of the first file is displayed in a position of the first book in the bookshelf interface; the display component is further configured to, after receiving a tap on the cover of the first file from a user, display the first file on the terminal screen.
